# EUROPEAN PATENT APPLICATION

(11) **EP 4 746 219 A1**
(43) Date of publication of application: **20.05.2026**
(21) Application number: 24213000.3
(22) Date of filing: 14.11.2024
(51) Int. Cl.: H02G 3/12, B28B 23/00, E04G 15/06, E04G 21/18

(54) **SUPPORT PART**

(71) Applicant: NC Plastics Oy, 01490 Vantaa (FI)
(72) Inventor: BURKIN, Nigel, 01490 Vantaa (FI)
(74) Representative: Berggren Oy

(57) **Abstract**

The invention relates to a support part (1) for supporting a structural element inside a construction element during prefabrication of the construction element, which support part comprises a fixing surface (3) for fixing the support part, a connection surface (5) for the structural element, and a longitudinally extending middle portion (6) connecting the fixing surface and the connection surface, wherein the support part (1) is formed as a single piece structure and that the support part comprises integrated fixing devices (7, 7a) for fixing the structural element to the support part via outer surfaces of the structural element.

## Description

### Technical field

The present invention relates to a support part for supporting structural elements in construction element manufacturing. These structural elements are junction boxes for electrical cables and for water pipes, for example.

### Background

During construction of buildings, the required electrical cables, pipes and HVAC elements, for example, are typically integrated in the construction elements forming the building. These cables and pipes need to be connected after the construction elements are installed at their places at the construction site. The connection points and/or junctions of the cables and pipes are typically accessed through junction boxes that are integrated in the construction elements.

Thus, during prefabrication of these construction elements, such as wall or floor elements for example, these junction boxes need to be located in the construction element at right level, position and angle in relation to the element to be prefabricated.

This is especially crucial for prefabricated concrete elements, since once the concrete has cured, the position of the junction boxes inside the concrete is fixed and it is very laborious and expensive to change that position or orientation.

Presently, when casting prefabricated concrete elements, the junction boxes are typically supported in the casting mould with a support piece, which is connected to the metallic casting bed with a magnet. After the concrete element is cured, and removed from the casting bed, the magnet is removed and the support part is left inside the concrete. However, removing the magnet from the surface of the concrete element will leave a void on the surface of the element, which needs to be filled. Typically, the depth of the void is 25-30 mm. Further, in some cases the magnets are too difficult to remove from the concrete element without significantly damaging the element, in which cases the magnets are left at their place in the element. Thus, the use of these magnets leads to extra work and/or losses of magnets, which increases the manufacturing costs of the prefabricated concrete elements.

Alternatively, wooden blocks may be used, to which blocks the junction boxes are hung during the formation of the construction element. After the formation of the construction element is done, the position of the junction boxes is fixed, and the wooden block is detached from the boxes and removed. The problem with this method is that it leads to defects, since the angle and/or level of the junction boxes in the construction element, and the exact position of the boxes, are not reliably fixed.

### Summary

The present invention provides a solution for overcoming, or at least significantly decreasing, the above-mentioned problems in the prefabrication of construction elements. Further, the present invention provides faster, more reliable and more cost-efficient installation of the junction boxes in the prefabrication of construction elements.

The support part of the invention, for supporting a structural element inside a construction element during prefabrication of the construction element, comprises a fixing surface for fixing the support part, a connection surface for the structural element, and a longitudinally extending middle portion connecting the fixing surface and the connection surface. The support part is formed as a single piece structure and the support part comprises integrated fixing devices for fixing the structural element to the support part via outer surfaces of the structural element.

A structural element is in this context a member of the construction element that needs to be included inside the space defined by the outer walls of the construction element during prefabrication of the construction element. Examples of these kinds of members include junction boxes for electrical and other cables or for water pipes, different kinds of pipes, reinforcements, etc.

A single piece structure in this context means that the support part consists of and is made as a single structural piece, which does not require any reassembling for use.

Connection via outer surfaces of the structural element means in this context that the fixing device of the support part, or its parts or portions, do not penetrate or extend in the inner space of the structural element. Due to this no through-holes are required on the surface of the structural element for connecting it to the support part with the fixing devices, which mitigates the risk of the material of the construction element, such as concrete mass penetrating the inside of the structural element during the manufacturing process of the construction element.

In an embodiment of the support part of the invention the cross-section of the middle portion is substantially smaller than the areas of the fixing surface and the connection surface. This allows easy detachment of the portion of the support part comprising the fixing surface from the rest of the support part after the manufacture of the construction element is done, if so required. In this embodiment the portion of the support part comprising the fixing surface is preferably plate-shaped, preferably having thickness of about 3-4 mm, whereby the detachment of this portion will leave only a shallow void in the construction element. The smaller void requires less material and time to be filled and to cure.

In an embodiment of the support part of the invention the fixing devices comprises protrusions extending from the connection surface, which protrusions are configured to form connection between the support part and the structural element to be supported via mating surfaces. The protrusions in this embodiment are preferably located at the edge areas of the connection surface, and the structural element is inserted between the protrusions. Further, the outer ends of the protrusions preferably comprise one or more surfaces extending from the side surface of the protrusion to achieve the mating form or form closed connection with the outer surface of the structural element.

In an embodiment of the support part of the invention material of the support part is plastic polymer. In this embodiment the glass transition temperature of the plastic polymer is preferably below 25° C, which allows suitable flexibility to the integrated fixing devices of the support part when the structural element is connected to the support part. Examples of these kinds of plastic polymers include polypropylene, polyethylene. Polymers with higher glass transition temperatures may also be used, but with suitable plasticizers or other means to lower their glass transition temperature.

In an embodiment of the support part of the invention the structural element to be supported is a junction box. The junction box may be a junction box for different types of cables, or for water pipes, for example.

In an embodiment of the support part of the invention the construction element is a concrete element, or an element consisting of cellulosic material, or an element consisting of or comprising concrete and cellulosic material. The cellulosic material may be wood or plywood, for example.

The present invention also provides use of a support part of the invention in fabrication of a construction element.

More precisely the features defining a support part in accordance with the present invention are presented in claim 1. Dependent claims present advantageous features and embodiments of the invention.

### Brief description of the drawings

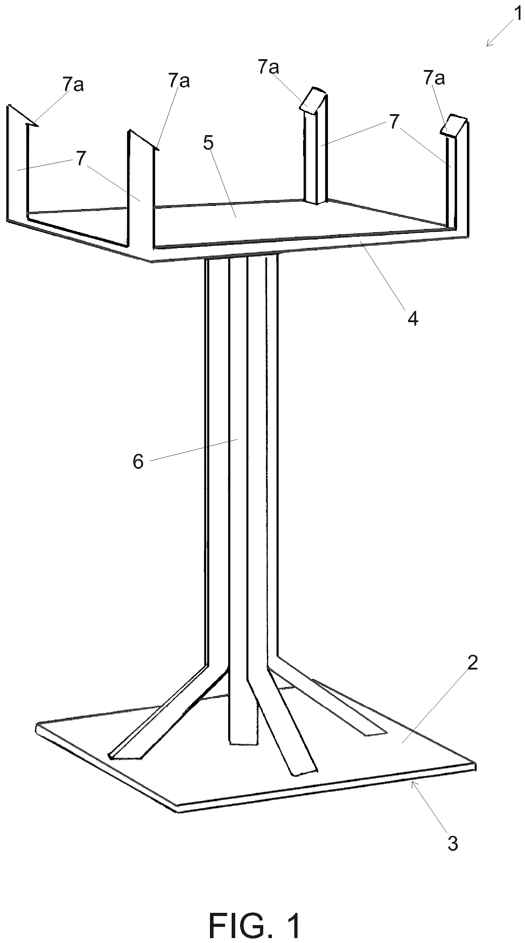

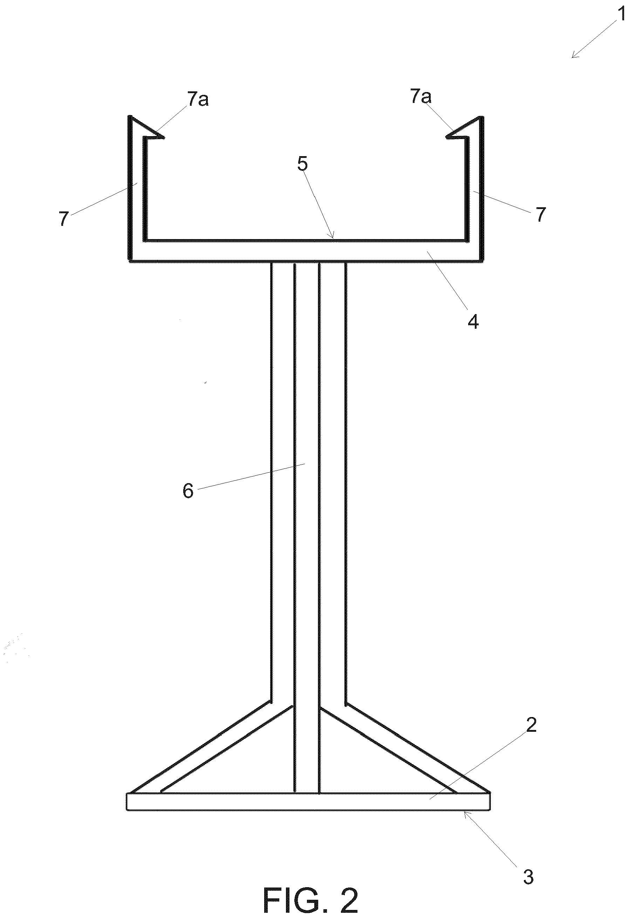

Exemplifying embodiment of the invention and its advantages are explained in greater detail below in the sense of example and with reference to accompanying drawings, where
Figs. 1 and 2 show schematically a support part in accordance with the present invention.

### Detailed description of an embodiment

In the embodiment of the invention shown in figures the support part 1 is formed as a single piece structure, and comprises fixing part 2 with fixing surface 3, connection part 4 with connection surface 5, and longitudinally extending middle portion 6 connecting the fixing part and the connection part at a distance from each other.

The distance between the fixing surface 3 and the connection surface 5 varies typically between 10 cm and 250 cm, depending on the construction element to be prefabricated and the position of the structural element to be supported inside the construction element.

At the edges of the connection part 4 is located protrusions 7 extending outward from the connection surface 5, which protrusions 7 there are four in this embodiment extending from each corner of the square form connection part of the embodiment. At the outer ends of the protrusions 7 is located side protrusions 7a extending from the protrusions 7 substantially perpendicular on the area of the connection surface 5. The end surfaces of the protrusions 7 are formed slanted.

The support part 1 is connected to suitable surface, such as a casting bed or another temporary support, via the fixing surface 3 with suitable means, such as glue or double-sided tape, for example.

A structural element, such as a junction box (not shown in figures) for example, is connected to the support part 1 by pushing it towards the connection surface 5, which forces the protrusions 7 flex outwards due to the side protrusions 7a connecting to the structural element. Once the lower surface of the structural element reaches the connections surface 5, the protrusions 7 return to their original, or substantially original, position and orientation, and the side protrusions 7a set themselves on top of the structural element, or in holes formed in the structural element, to fix the structural element to the support part 1.

The size of the connection surface 5 and the dimensions and positions of the protrusions 7 and side protrusions 7a are designed to correspond to the size and shape of the structural element to be supported with the support part 1. It is, however, possible to use an adapter on the connection surface 5 to make the support part 1 suitable for supporting also different structural elements than the ones the support part is originally designed for.

The material of the support part 1 is preferably plastic polymer, which allows easy and simple, as well as cost efficient, manufacture of the support part.

In the embodiment shown in figures the fixing part 2 comprising the fixing surface 3 plate-shaped with a plurality of small connection points to the middle portion 6 of the support part 1. This allows easy detachment of the fixing part 2 from the rest of the support part after the prefabricated construction element is ready, if that is required. Alternatively, the whole support part 1 can be left in the construction element.

The specific exemplifying embodiment of the invention shown in the figures and discussed above should not be construed as limiting. A person skilled in the art can amend and modify the embodiment described in many evident ways within the scope of the attached claims. Thus, the invention is not limited merely to the embodiment described above.

## Claims

1. Support part (1) for supporting a structural element inside a construction element during prefabrication of the construction element, which support part comprises a fixing surface (3) for fixing the support part, a connection surface (5) for the structural element, and a longitudinally extending middle portion (6) connecting the fixing surface and the connection surface, **characterized in** the support part (1) is formed as a single piece structure and that the support part comprises integrated fixing devices (7, 7a) for fixing the structural element to the support part via outer surfaces of the structural element.

2. Support part (1) of claim 1, wherein the cross-section of the middle portion (6) is substantially smaller than the areas of the fixing surface (3) and the connection surface (5).

3. Support part (1) of claim 2, wherein the portion (2) of the support part (1) comprising the fixing surface (3) is plate-shaped.

4. Support part (1) of any of claims claim 1-3, wherein the fixing devices comprises protrusions (7, 7a) extending from the connection surface (5), which protrusions are configured to form connection between the support part (1) and the structural element to be supported via mating surfaces.

5. Support part (1) of any of claims 1-4, wherein material of the support part (1) is plastic polymer.

6. Support part (1) of claim 5, wherein the glass transition temperature of the plastic polymer is below 25° C.

7. Support part (1) of any of claims 1-6, wherein the structural element to be supported is a junction box.

8. Support part (1) of any of claims 1-7, wherein the construction element is a concrete element, or element consisting of cellulosic material, or element consisting of or comprising concrete and cellulosic material.

9. Use of a support part (1) of any preceding claims in fabrication of a construction element.
